Europäisches Patentamt

European Patent Office

Office européen des brevets

(11) Veröffentlichungsnummer: **0 344 740**
**A2**

## (12) EUROPÄISCHE PATENTANMELDUNG

(21) Anmeldenummer: **89109811.3**

(22) Anmeldetag: **31.05.89**

(51) Int. Cl.⁴: **B21D 35/00**

(30) Priorität: **03.06.88 DE 3818824**

(43) Veröffentlichungstag der Anmeldung:
**06.12.89 Patentblatt 89/49**

(84) Benannte Vertragsstaaten:
**BE CH DE FR GB IT LI NL**

(71) Anmelder: **KARGES-HAMMER-MASCHINEN GmbH & Co. KG**
**Frankfurter Strasse 36**
**D-3300 Braunschweig(DE)**

(72) Erfinder: **Lauckner, Gerhard**
**Lindener Strasse 69**
**D-3340 Wolfenbüttel(DE)**

(74) Vertreter: **Lins, Edgar, Dipl.-Phys. et al**
**Patentanwälte Gramm + Lins**
**Theodor-Heuss-Strasse 2**
**D-3300 Braunschweig(DE)**

(54) Vorrichtung zum Ausstanzen und Ziehen von Dosenkörpern.

(57) Zum Ausstanzen von Platinen und Ziehen von Dosenkörpern aus den Platinen ist eine kombinierte Vorrichtung vorgesehen, mit der die Ausstanzungen aus Blechtafeln (2) erfolgt. Zur Erzielung eines kompakten Aufbaus ist unmittelbar hinter dem Stanzwerkzeug (11) und vor Ziehwerkzeugen (15, 16, 17) eine Schrottschere (12) vorgesehen, die bei jedem Vorschub der Blechtafel (2) in axiale Richtung einen Streifen des durch die Ausstanzungen gebildeten Gitters abschneidet. Der Streifen wird seitlich aus der Maschine platzsparend heraustransportiert.

Fig. 1

Xerox Copy Centre

EP 0 344 740 A2

## Vorrichtung zum Ausstanzen und Ziehen von Dosenkörpern

Die Erfindung betrifft eine Vorrichtung mit einem oder mehreren Stanzwerkzeugen zum Ausstanzen von Platinen und wenigstens einem Ziehwerkzeug zum Ziehen von Dosenkörpern aus den Platinen, vorzugsweise in mehreren Ziehgängen, mit einer Zuführeinrichtung für Blechtafeln und mit einer Abtransporteinrichtung für die abgetrennten Stanzgitter.

Bei bekannten Vorrichtungen dieser Art werden über die Zuführeinrichtungen Blechstreifen zugeführt, aus denen die Platinen für die Dosenkörper ausgestanzt werden. Die ausgestanzten Platinen werden zum Ziehwerkzeug transportiert und die die Stanzreste bildenden Gitterstreifen aus der Stanze abgeführt.

Es ist auch bekannt, das Ausstanzen der Platinen aus einem schmalen, endlos aufgewickeltem Blech (Coil) vorzunehmen. Die dabei mögliche Blechbreite des Coils entspricht meist einer Platinenbreite, maximal zwei Platinenbreiten. Breitere Coils lassen sich regelmäßig nicht verarbeiten, weil für das Ausstanzen von nebeneinander liegenden Platinen die gesamte Coilhalterung mit dem Coil seitlich verschoben werden muß, und zwar exakt und sehr schnell, um die für eine wirtschaftliche Fertigung erforderlichen Taktzeiten einzuhalten. Die große Masse des aufgewickelten Coils führt hier zu erheblichen Problemen. Mit jedem Vorschub des Coils zur Durchführung neuer Stanzvorgänge wird eine hinter der Stanzeinrichtung angeordnete Schere betätigt, die das ausgestanzte Gitter in der Breite eines Coilvorschubs abschneidet. Die Zuführung der Platinen zu den möglicherweise mehrfachen Ziehwerkzeugen erfolgt in bekannter Weise durch Greiferschienen, die taktweise die Platinen zum ersten Ziehwerkzeug, die gezogenen Teile vom ersten zum zweiten Ziehwerkzeug usw. transportieren.

Die Kosten für eine Dose werden entscheidend von dem verbrauchten Material bestimmt. Es wird daher angestrebt, beim Ausstanzen der Platinen einen möglichst geringen Materialrest des Gitters zu produzieren, d. h. eine möglichst hohe Ausnutzung des zugeführten Material für die Bildung der Platinen zu erreichen. Aufgrund der geringen möglichen Breite eines Coilbleches ist die Materialausnutzung bei einem Coil relativ schlecht. Das gleiche gilt für die Verarbeitung von Blechstreifen, da die notwendig stehenbleibenden Ränder im Verhältnis zur ausgestanzten Platine relativ groß sind.

Der Erfindung liegt die Erkenntnis zugrunde, daß Ausstanzungen aus einer Blechtafel einen höheren Ausnutzungsgrad für das Material erlauben, da die für eine sichere Ausstanzung erforderlichen Randbereiche auch für die benachbarte Stanzung wirksam und Stege zwischen zwei Stanzungen wesentlich günstiger sind als stehengelassene Randbereiche eines Streifens oder eines Coils. Eine im Ausnutzungsgrad günstigere Blechtafel weist daher eine Mehrzahl von Platinenausstanzungen sowohl in Längs- als in Querrichtung auf. Die Handhabung derartiger Blechtafeln ist allerdings raumintensiv, da nach dem Ausstanzen der Platinen Gitter in der Größe der Blechtafeln anfallen und abtransportiert werden müssen. Einer Kombination der Stanzvorrichtung mit der Ziehvor richtung standen daher die resultierenden großen Abmessungen entgegen.

Der Erfindung liegt demgegenüber die Aufgabe zugrunde, eine Vorrichtung der eingangs erwähnten Art als kombinierte Vorrichtung zum Stanzen und Ziehen mit einem relativ geringen Platzbedarf auszubilden.

Diese Aufgabe wird bei einer Vorrichtung der eingangs erwähnten Art dadurch gelöst, daß die Zuführeinrichtung für Blechtafeln ausgelegt ist, daß im Anschluß an das Stanzwerkzeug eine Schrottschere zum Abschneiden jeweils eines eine Platinenbreite beinhaltenden Streifens angeordnet ist und daß die Abtransportrichtung im Anschluß an die Schrottschere zwischen Stanzwerkzeug und Ziehwerkzeug angeordnet und für den Abtransport von Streifen einer Platinenbreite ausgelegt ist.

Die erfindungsgemäße Vorrichtung erlaubt die Verarbeitung von Blechtafeln, ohne deren Nachteile in Kauf nehmen zu müssen. Dies wird dadurch bewirkt, daß die Blechtafeln dem Stanzwerkzeug zugeführt werden und bei jedem Vorschub der Blechtafeln zum Stanzwerkzeug ein Schnitt mit der Schrottschere durchgeführt wird, so daß im Anschluß an das Stanzwerkzeug von dem Tafelgitter ein Streifen abgeschnitten und sofort seitlich abtransportiert wird. Der Abtransport eines Streifens ist auf einem geringen Raum möglich, so daß die erfindungsgemäße Vorrichtung relativ platzsparend und kompakt aufgebaut werden kann. Unmittelbar an die Schrottschere schließen sich dann die Ziehwerkzeuge an, denen die ausgestanzten Platinen in herkömmlicher Weise zugeführt werden, und zwar vorzugsweise durch einen Transport unterhalb der Abtransportebene für die Gitterstreifen.

Besonders vorteilhaft ist es, wenn das Stanzwerkzeug und das Ziehwerkzeug von derselben Exzenterwelle angetrieben werden. Von der Bewegung dieser Exzenterwelle wird im übrigen auch die Vorschubbewegung und die Schneidbewegung der Schrottschere abgeleitet.

Die Erfindung soll im folgenden anhand eines in der Zeichnung dargestellten Ausführungsbeispiels näher erläutert werden. Es zeigen:

Figur 1 - eine schematische Seitenansicht einer Stanz- und Ziehvorrichtung

Figur 2 - eine Draufsicht auf die Verarbeitungsebene der Vorrichtung gemäß Figur 1.

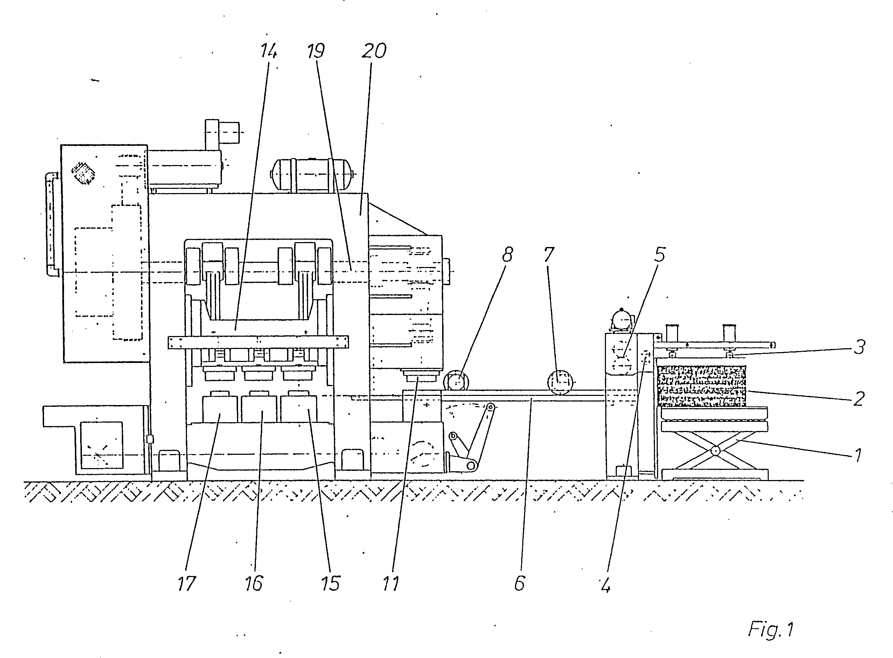

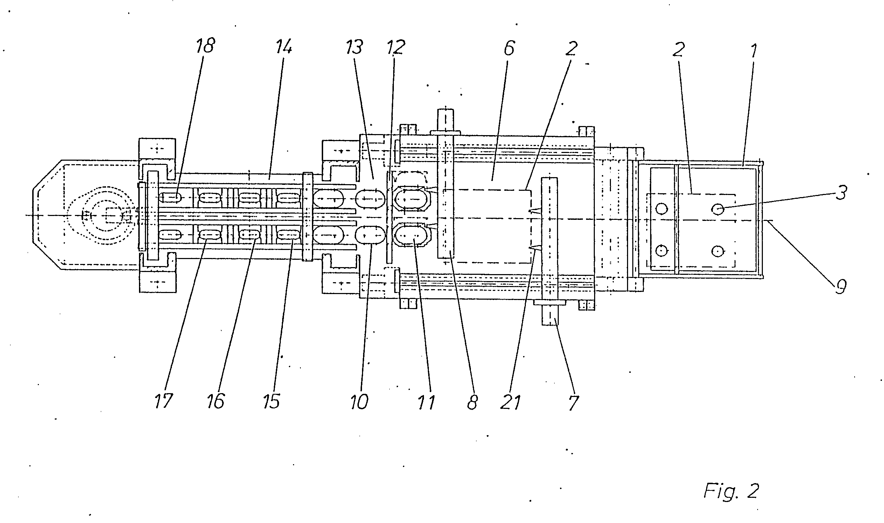

In den Figuren 1 und 2 ist der Bearbeitungsablauf von rechts nach links dargestellt. Auf der rechten Seite befindet sich ein Hubtisch 1, der einen Stapel Blechtafeln 2 trägt. Die jeweils oberste Blechtafel 2 wird von Saugnäpfen 3 ergriffen und durch Walzenspalte 4, 5 auf eine Fördertisch 6 vorgefördert. Auf dem Fördertisch 6 bewegen sich zwei Vorschubbalken 7, 8 sowohl parallel zur Längsachse 9 als auch schrittweise quer dazu. Die Vorschubbalken 7, 8 ergreifen jeweils eine Blechtafel 2 an der in der Förderrichtung gesehen hinteren Kante mit Spannzangen 21 und sorgen so für einen schrittweisen Vorschub der Blechtafeln 2 sowohl in axiale Richtung als auch schrittweise quer dazu zur Durchführung der Ausstanzungen von Platinen 10 durch ein Stanzwerkzeug 11. Figur 2 läßt erkennen, daß in dem dargestellten Ausführungsbeispiel ovale Platinen 10 gestanzt werden und daß aus einer Blechtafel 2 zwölf Platinen gestanzt werden, wobei vier Platinen über die Breite der Blechtafel 2 nebeneinander ausgestanzt werden. Hierfür werden zwei Stanzwerkzeuge 11 verwendet, die einen freien Abstand einer Platinenbreite aufweisen.

Im Anschluß an das Stanzwerkzeug ist eine Schrottschere 12 angeordnet, die nach dem Vorschub der Blechtafel 2 die ausgestanzte Gitterreihe abtrennt. Über ein Förderband 13 werden die abgeschnittenen Gitterstreifen seitlich platzsparend abtransportiert.

Die ausgeschnittenen Platinen 10 werden nun schrittweise in eine Transferpresse 14 transportiert, die drei hintereinander angeordnete verschiedene Ziehwerkzeuge 15, 16, 17 zur Durchführung eines dreistufigen Ziehvorganges aufweist. Die Bördelkanten der so hergestellten tiefgezogenen Dosen werden in einer Arbeitsstation 18 beschnitten. Anschließend können die tiefgezogenen, vorzugsweise konischen Dosen abtransportiert und gestapelt werden.

Die Verwendung zweier Vorschubbalken 7, 8 hat den Vorteil, daß das Stanzen ohne einen Leerhub erfolgen kann. Der Vorschub der Vorschubbalken 7, 8 erfolgt mit Motoren 13, die jeweils eine Spindel 13′ antreiben.

Die beiden Vorschubbalken 7, 8 sind an verschiedenen Seiten gelagert und übergreifen den Fördertisch 6 freischwebend. Sie sind beide hoch kippbar gelagert, um beim Zurückfahren dem jeweils anderen Vorschubbalken 7, 8 den Vorschub der ergriffenen Blechtafel 2 in das Stanzwerkzeug 11 zu ermöglichen.

Der Antrieb des Stanzwerkzeuges 11 wie auch der Ziehwerkzeuge 15, 16, 17 und des Beschneidewerkzeuges 18 erfolgt über eine gemeinsame Exzenterwelle 19, die im Maschinengestell 20 der Vorrichtung gelagert ist.

## Ansprüche

1. Vorrichtung mit einem oder mehreren Stanzwerkzeugen (11) zum Ausstanzen von Platinen (10) und wenigstens einem Ziehwerkzeug (15, 16, 17) zum Ziehen von Dosenkörpern aus den Platinen (10), vorzugsweise in mehreren Ziehgängen, mit einer Zuführeinrichtung (6, 7, 8) für Blechtafeln und mit einer Abtransporteinrichtung (13) für die abgetrennten Stanzgitter, dadurch gekennzeichnet, daß die Zuführeinrichtung (6, 7, 8) für Blechtafeln ausgelegt ist, daß im Anschluß an das Stanzwerkzeug (11) eine Schrottschere (12) zum Abschneiden jeweils eines eine Platinenbreite beinhaltenden Streifens angeordnet ist und daß die Abtransporteinrichtung (13) im Anschluß an die Schrottschere (12) zwischen Stanzwerkzeug (11) und Ziehwerkzeug (15, 16, 17) angeordnet und für den Abtransport von Streifen einer Platinenbreite ausgelegt ist.

2. Vorrichtung nach Anspruch 1, dadurch gekennzeichnet, daß das Stanzwerkzeug (11) und das Ziehwerkzeug (15, 16,17) von derselben Exzenterwelle (19) angetrieben wird.

Fig. 1

EP 0 344 740 A2

Fig. 2

EP 0 344 740 A2